Europäisches Patentamt

European Patent Office

Office européen des brevets

(19)

(11) Numéro de publication: **0 044 782**
**B1**

(12) FASCICULE DE BREVET EUROPEEN

(45) Date de publication du fascicule du brevet: **21.12.83**

(51) Int. Cl.³: **C 25 B 1/12, C 25 B 15/08**

(21) Numéro de dépôt: **81401141.7**

(22) Date de dépôt: **20.07.81**

(54) Procédé de dégazage et recyclage de l'électrolyte dans un électrolyseur pour la production de gaz.

(30) Priorité: **22.07.80 FR 8016106**

(43) Date de publication de la demande:
**27.01.82 Bulletin 82/4**

(45) Mention de la délivrance du brevet:
**21.12.83 Bulletin 83/51**

(84) Etats contractants désignés:
**AT BE CH DE FR GB IT LI NL SE**

(56) Documents cités:
**CH - A - 334 614**

(73) Titulaire: **CREUSOT-LOIRE**
**42 rue d'Anjou**
**F-75008 Paris (FR)**

(72) Inventeur: **Pere, Gérard**
**6 rue d'Essertenne**
**F-71670 Le Breuil (FR)**

(74) Mandataire: **Dupuy, Louis et al,**
**CREUSOT-LOIRE 15 rue Pasquier**
**F-75383 Paris Cedex 8 (FR)**

EP 0 044 782 B1

Courier Press, Leamington Spa, England.

Procédé de dégazage et recyclage de l'électrolyte dans un électrolyseur pour la production de gaz

La présente invention se rapporte à un procédé de dégazage et de recyclage d'électrolyte par exemple dans une installation destinée à la production industrielle d'hydrogène et d'oxygène par électrolyse de l'eau sous pression.

Dans les installations d'électrolyse connues actuellement, par exemple telles que décrites dans la demande de brevet français publiée le 31 Octobre 1980 sous le N° 2.453.222, les circuits de retour d'anolyte et de catholyte en provenance des séparateurs sont réunis dans une même tuyauterie, ce qui permet d'obtenir ainsi de densités en potasse à l'entrée de l'électrolyseur égales du côté anodique et du côté cathodique. Cette mise en commun des circuits de retour d'électrolyte dégazé permet, en assurant des densités en potasse égales à chacune des deux entrées de l'électrolyseur, d'éviter une baisse de rendement de l'électrolyseur au fur et à mesure de son fonctionnement qui serait due à l'augmentation de la densité en potasse du côté cathodique et à la diminution corrélative de celle-ci du côté anodique. On sait en effet que la réaction d'électrolyse entraîne une perte de potasse et un gain d'eau du côté de l'anode, et vice-versa du côté de la cathode; or, la résistivité de l'électrolyte est fonction de la densité de celui-ci en potasse et augmente si on s'écarte sensiblement de part et d'autre de la densité optimale. Il est donc indispensable, pour fonctionner avec un bon rendement, de garder toujours les densités de potasse aux entrées de l'électrolyseur voisines de la densité optimale correspondant au minimum de résistivité du mélange électrolytique.

Avec les installations connues, il est indispensable, pour éviter les risques d'explosion consécutifs à d'éventuels mélanges de gaz hydrogène et oxygène, d'utiliser des séparateurs liquide-gaz très efficaces, ceux-ci devant dégazer la totalité du débit d'électrolyte en circulation. De tels dégazeurs sont encombrants et onéreux, et il serait souhaitable de pouvoir équiper l'installation d'électrolyse avec des appareils de dégazage moins sophistiqués.

La présente invention concerne un nouveau type de procédé pour une installation d'électrolyse qui, tout en fonctionnant à rendement optimal comme les installations évoquées ci-dessus, n'en présente pas les inconvénients, pouvant être partiellement équipée de dégazeurs plus simples et en tout cas de dégazeurs moins encombrants. Une telle installation est du type comportant un électrolyseur à sortie d'anolyte à débit A, ledit anolyte y étant chargé de bulles du gaz dû à la réaction d'électrolyse du côté de l'anode, et à sortie de catholyte à débit C, ledit catholyte y étant chargé de bulles de gaz dû à la réaction d'électrolyse du côté de la cathode, ledit électrolyseur étant par ailleurs muni d'une entrée d'anolyte à même débit A qu'à ladite sortie d'anolyte et d'une entrée de catholyte à même débit C qu'à ladite sortie de catholyte; le procédé de l'invention est caractérisé en ce que pour le circuit de retour d'électrolyte situé entre lesdites entrées et lesdites sorties d'électrolyseur, il consiste à transférer:
— une portion

$$Ax\frac{C}{A+C}$$

du débit A d'anolyte de la sortie anolyte vers l'entrée catholyte, le circuit de transfert étant équipé d'un séparateur liquide-gaz à dégazage poussé, défini ci-après
— Une portion

$$C\times\frac{A}{A+C}$$

du débit C de catholyte de la sortie catholyte vers l'entrée anolyte, le circuit de transfert étant également équipé d'un séparateur liquide-gaz à dégazage poussé.
— La portion restante

$$\frac{A^2}{A+C}$$

du débit A d'anolyte de la sortie anolyte vers l'entrée anolyte, le circuit de transfert étant équipé d'un séparateur liquide-gaz à dégazage sommaire, défini ci-après.
— La portion restante

$$\frac{C^2}{A+C}$$

du débit C de catholyte de la sortie catholyte vers l'entrée catholyte, le circuit de transfert étant équipé d'un séparateur liquide-gaz à dégazage sommaire.

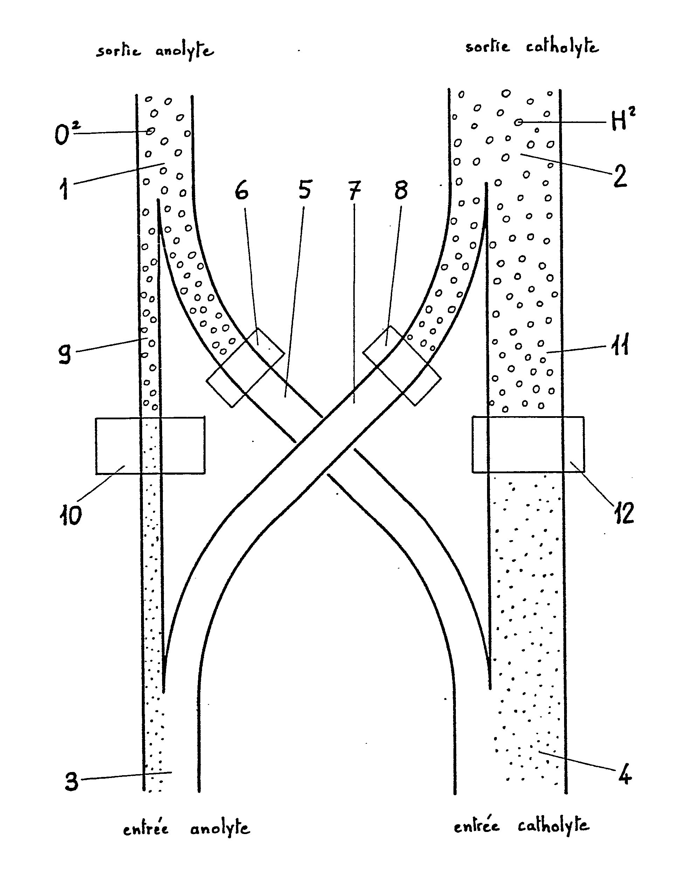

L'invention sera mieux comprise à l'aide de la description suivante d'un exemple de réalisation appliqué à une installation destinée à la production industrielle d'hydrogène et d'oxygène par électrolyse de l'eau sous pression, en référence à la figure unique annexée en représentant schématiquement le circuit de retour d'électrolyte.

Sur la figure, la référence 1 désigne la sortie anolyte de l'électrolyseur, chargée de bulles d'oxygène $O_2$, et la référence 2 sa sortie catholyte chargée de bulles d'hydrogène $H_2$. De manière classique pour le cas de l'électrolyse de l'eau, les débits C de catholyte et A d'anolyte sont dans le rapport (2/3—1/3) de débit total d'électrolyte, comme on l'a schématisé de façon imagée par des épaisseurs de tuyau correspondantes sur le dessin, où le débit A d'anolyte est schématisé par une épaisseur de tuyau de 1,5 cm tandis que le débit C de catholyte est schématisé par une épaisseur de tuyau de 3 cm (le débit total d'électrolyte passerait donc dans un tuyau d'épaisseur équivalente de 4,5 cm). Sur la figure par ailleurs, les références 3 et 4 désignent les entrées d'anolyte et de catholyte, passant également les débits A et C. Conformément à l'invention, ou passe des sorties anolyte 1 et catholyte 2 aux entrées anolyte 3 et catholyte 4 de l'électrolyseur par l'intermédiaire des circuits suivants:

— Un circuit 5 transférant, de la sortie anolyte 1 à l'entrée catholyte 4, une portion

$$A \times \frac{C}{A + C}$$

du débit A d'anolyte, ledit circuit de transfert 5 étant équipé d'un dégazeur 6 à dégazage poussé, permetant de séparer les bulles de gaz jusqu'à celles d'un diamètre de 5 à 10 $\mu$m, tel que par un exemple un séparateur liquide-gaz décrit dans la demande de brevet français N° 2.448.378 publiée le 5 Septembre 1980. Dans l'exemple schématisé sur la figure, le débit d'anloyte ainsi transféré est alors représenté, de manière imagée, par un tuyau d'une largeur égale à 1 cm.

— Un circuit 7 transférant, de la sortie catholyte 2 à l'entrée anolyte 3, une portion

$$C \times \frac{A}{A + C}$$

du débit C de catholyte, ledit circuit de transfert 7 étant également équipé d'un dégazeur 8 à dégazage poussé, identique au dégazeur 6. De même que précédemment, le débit de catholyte ainsi transféré est schématisé sur la figure par un tuyau de largeur égale à 1 cm.

— Un circuit 9 transférant, de la sortie 1 d'anolyte à l'entrée 3 d'anolyte, la portion restante

$$A - \frac{A.C}{A + C} = \frac{A^2}{A + C}$$

du débit A d'anolyte, ledit circuit 9 étant équipé d'un dégazeur 10 à dégazage sommaire, ne séparant du mélange gaz liquide que les plus grosses bulles, d'un diamètre supérieur à 30 à 50 $\mu$m pour fixer les idées.

Un tel dégazeur pourrait être par exemple constitué par le dégazeur selon la demande française n° 2 448 378 précédemment citée, dans lequel on aurait enlevé les piles de plateaux pour ne laisser que l'écran vertical placé immédiatement à l'entrée du cylindre constituant l'enceinte du gégazeur. Dans l'exemple schématisé sur la figure, le débit

$$\frac{A^2}{A + C}$$

ainsi transféré par le circuit 9 est alors représenté par un tuyau de largeur égale à 0,5 cm.

— Un circuit 11 transférant, de la sortie 2 de catholyte à l'entrée 4 de catholyte, la portion restante:

$$C - \frac{A.C}{A + C} = \frac{C^2}{A + C}$$

du débit C de catholyte, ledit circuit 11 étant également équipé d'un dégazeur 12 à dégazage sommaire, de même type que le dégazeur 10, mais apte à passer le débit

$$\frac{C^2}{A + C}$$

considéré. Dans l'exemple schématisé sur la figure, le débit

$$\frac{C^2}{A + C}$$

ainsi transféré par le circuit 11 est alors représenté, de manière imagée, par un tuyau de largeur égale à 2 cm.

On peut alors constater que, à l'aide du procédé de l'invention, l'électrolyte injecté dans l'électrolyseur aussi bien en 3 qu'en 4 se trouve être constitué par un mélange dans la proportion (1/3—2/3) soit

$$\frac{A}{C}$$

des débits A d'anolyte et C de catholyte en sorties (1, 2) de l'électrolyseur.

Directement sur la figure, on voit en effet que l'électrolyte côté entrée anolyte 3 est représenté, dans l'image considérée, par un débit de largeur totale 1,5 cm composé de 0,5 cm d'anolyte en provenance de la sortie 1 et de 1 cm de catholyte en provenance de la sortie 2, tandis que l'électrolyte côté entrée catholyte 4 y est, de manière imagée, représenté par un débit de largeur totale 3 cm composé de 1 cm d'anolyte en provenance de la sortie 1 et de 2 cm de catholyte en provenance de la sortie 2: On a donc bien dans les deux cas un rapport (1/3—2/3) entre les quantités d'anolyte et de catholyte.

On peut également calculer, dans le cas général que, à l'entrée de l'électrolyseur, la proportion d'électrolyte est composée d'un mélange anolyte-catholyte de sortie le rapport A/C des débits A d'anolyte et C de catholyte en sortie de l'électrolyseur.

En effet ledit rapport anolyte-catholyte est égal à

$$\frac{A^2}{A + C} : \frac{A \times C}{A + C} = \frac{A}{C}$$

pour l'entrée anolyte

et $$\frac{A \times C}{A + C} : \frac{C^2}{A + C} = \frac{A}{C}$$

pour l'entrée catholyte.

On constate finalement que l'on obtient un résultat analogue à celui obtenu avec les dispositifs de l'art antérieur, mais au lieu d'utiliser des dégazeurs à dégazage poussé et à fort débit, on utilise ici deux dégazeurs à dégazage poussé mais à plus faible débit et deux dégazeurs sommaires à débit partiel, de sorte que le coût de l'installation s'en trouve finalement diminué.

**Revendication**

Procédé de réalisation du circuit de retour d'électrolyte entre les sorties (1,2) et les entrées (3,4) d'un électrolyseur équipant une installation d'électrolyse pour la production de gaz, ledit électrolyseur comportant une sortie d'anolyte (1) à débit A, ledit anolyte y étant chargé de bulles du gaz ($O^2$) dû à la réaction d'électrolyse du côté de l'anode, et une sortie de catholyte (2) à débit C, ledit catholyte y étant chargé de bulles du gaz ($H^2$) dû à la réaction d'électrolyse du côté de la cathode, ledit électrolyseur étant par ailleurs muni d'une entrée d'anolyte (3) à même débit A qu'à ladite sortie d'anolyte et d'une entrée de catholyte (4) à même débit C qu'à ladite sortie de catholyte, caractérisé en ce qu'il consiste:

— à transférer, á l'aide d'un premier circuit (5) de transfert, une portion

$$A \times \frac{C}{A + C}$$

du débit A d'anolyte de la sortie anolyte (1) vers l'entrée catholyte (4), ledit premier circuit de transfert étant équipé d'un séparateur liquide-gaz (6) à dégazage poussé, permettant de séparer les bulles de gaz jusqu'à celles descendant à un diamètre de l'ordre de 5 à 10 $\mu$m,

— à transférer, à l'aide d'un premier circuit (7) de transfert, une portion

$$C \times \frac{A}{A + C}$$

du débit C de catholyte de la sortie catholyte (2) vers l'entrée anolyte (3), ledit circuit de transfert étant également équipé d'un séparateur liquide-gaz (8) à dégazage poussé, identique au séparateur (6) du premier circuit (5),

— à transférer à l'aide d'un troisième circuit (9) de transfert, la portion restante

$$\frac{A^2}{A + C}$$

du débit A d'anolyte de la sortie anolyte (1) vers l'entrée anolyte (3), ledit circuit étant équipé d'un séparateur liquide-gaz (10) à dégazage sommaire, ne séparant que les bulles de gaz d'un diamètre supérieur à environ 30 à 50 $\mu$m,

— à transférer à l'aide d'un quatrième circuit (11) de transfert, la portion restante

$$\frac{C^2}{A + C}$$

du débit C de catholyte de la sortie catholyte (2) vers l'entrée catholyte (4) ledit circuit étant également équipé d'un séparateur liquide-gaz (12) à dégazage sommaire.

**Claim**

Process for producing the electrolyte return circuit between the outlets (1,2) and the inlets (3,4) of an electrolyser equipping an electrolysis installation for the production of gas, the said electrolyser comprising an anolyte outlet (1) of flow A, the said anolyte being charged therein with bubbles of the gas ($O_2$) due to the electrolysis reaction on the anode side, and a catholyte outlet (2) of flow C, the said catholyte being charged therein with bubbles of the gas ($H_2$) due to the electrolysis reaction on the cathode side, the said electrolyser furthermore being provided with an anolyte inlet (3) of the same flow A as at the said anolyte outlet, and with a catholyte inlet (4) of the same flow C as at the said catholyte outlet, characterised in that it consists in:

— transferring, by means of a first transfer circuit (5), a portion

$$A \times \frac{C}{A + C}$$

of the anolyte flow A from the anolyte outlet (1) to the catholyte inlet (4), the said first transfer circuit being equipped with a liquid/gas separator (6) with highly efficient degassing, making it possible to separate off the gas bubbles as far as those dropping to a diameter of the order of 5 to 10 $\mu$m,

— transferring, by means of a second transfer circuit (7), a portion

$$C \times \frac{A}{A + C}$$

of the catholyte flow C from the catholyte outlet (2) to the anolyte inlet (3), the said transfer circuit also being equipped with a liquid/gas separator (8) with highly efficient degassing, which is identical to the separator (6) of the first circuit (5),

— transferring, by means of a third transfer circuit (9), the remaining portion

$$\frac{A^2}{A + C}$$

of the anolyte flow A from the anolyte outlet (1) to the anolyte inlet (3), the said circuit being equipped with a liquid/gas separator (10) with brief degassing, which only separates the gas bubbles with a diameter of more than about 30 to 50 $\mu$m, and

— transferring, by means of a fourth transfer circuit (11), the remaining portion

$$\frac{C^2}{A + C}$$

of the catholyte flow C from the catholyte outlet (2) to the catholyte inlet (4), the said circuit also being equipped with a liquid/gas separator (12) with brief degassing.

## Patentanspruch

Verfahren azur Herstellung eines Electrolytrückführungskreises zwischen den Auslässen (1, 2) und den Einlässen (3, 4) eines Elektrolysegerätes, mit welchem eine Elektrolyseanlage für die Herstellung von Gas ausgerüstet ist, wobei das Elektrolysegerät einen Auslaß (1) für den Anolyten mit einer Abgabemenge A aufweist, wobei der Anolyt dort mit Blasen von Gas (O²) beladen wird, das während der Elektrolysereaktion auf der Seite der Anode anfällt, und einen Auslaß (2) für den Katholyten mit einer Abgabemenge C besitzt, wobei der Katholyt dort mit Blasen von Gas (H²) beladen wird, das bei der Elektrolysereaktion auf der Seite der Kathode anfällt und daß das Elektrolysegerät mit einem Einlaß (3) für den Anolyten versehen ist, mit der gleichen Zufuhr- bzw. Durchsatzmenge A wie am Auslaß für den Anolyten, und einen Einlaß (4) für den Katholyten besitzt, mit der gleichen Zufuhr- bzw. Durchsatzmenge C wie am Auslaß für den Katholyten, dadurch gekennzeichnet, daß mittels eines ersten Übertragungskreises (5) eine Teilmenge

$$A \times \frac{C}{A + C}$$

der Menge A an Anolyt vom Auslaß (1) für den Anolyten zum Einlaß (4) für den Katholyten hin übertragen wird, wobei der erste Übertragungskreis mit einem Gas-Flüssigkeits-Abscheider (6) mit Druckentgasung versehen ist, der die Abscheidung von Gasblasen bis auf solche unterhalb eines Durchmessers in der Größenordnung von 5—10 $\mu$m zuläßt, daß mittels eines zweiten Übertragungskreises (7) eine Teilmenge

$$C \times \frac{A}{A + C}$$

der Menge C an Katholyt vom Auslaß (2) für den Katholyten zum Einlaß (3) für den Anolyten hin übertragen wird, wobei dieser Übertragungskreis ebenfalls mit einem Gas-Flüssigkeits-Abscheider (8) mit Druckentgasung versehen ist, welcher identisch mit dem Abscheider (6) des ersten Übertragungskreises (5) ist, daß mittels eines dritten Übertragungskreises (9) die verbleibende Teilmenge

$$\frac{A^2}{A + C}$$

der Anolytmenge A vom Auslaß (1) für den Anolyten zum Einlaß (3) für den Anolyten hin übertragen wird, wobei dieser Übertragungskreis mit einem Gas-Flüssigkeits-Abscheider (10) mit summarischer Entgasung versehen ist, der nur Gasblasen mit einem Durchmesser von mehr als etwa 30—50 $\mu$m abscheidet, und daß mittels eines vierten Übertragungskreises (11) die verbleibende Teilmenge

$$\frac{C^2}{A + C}$$

der Katholytmenge C vom Auslaß (2) für den Katholyten zum Einlaß (4) für den Katholyten hin übertragen wird und dieser Kreis ebenfalls mit einem Gas-Flüssigkeits-Abscheider (12) mit summarischer Entgasung versehen ist.

0 044 782

sortie anolyte

sortie catholyte

entrée anolyte

entrée catholyte

1